# EUROPÄISCHE PATENTSCHRIFT

(11) **EP 2 277 681 B1**
(45) Veröffentlichungstag und Bekanntmachung des Hinweises auf die Patenterteilung: **22.08.2012**
(21) Anmeldenummer: 10006478.1
(22) Anmeldetag: 22.06.2010
(51) Int. Cl.: B29C 47/92, B29C 55/28, B29L 23/00, B29C 47/00

(54) **Verfahren und Vorrichtung zur Dickenregelung von gereckter Blasfolie**
Method and device for regulating the thickness of stretched blow film
Procédé et dispositif de réglage de l'épaisseur d'une lamelle de soufflage étirée

(30) Priorität: 13.07.2009 DE 102009033171
(43) Veröffentlichungstag der Anmeldung: 26.01.2011
(73) Patentinhaber: HOSOKAWA ALPINE Aktiengesellschaft, 86199 Augsburg (DE)
(72) Erfinder: Bayer, Bernd, Dipl.-Ing. (FH), 86399 Bobingen (DE); Klimek, Lothar, M.S., Dipl.-Ing.(FH), 86339 Bobingen (DE); Niemeier, Holger, Dr.-Ing., 86163 Augsburg (DE)

(56) Entgegenhaltungen:
- WO-A1-97/22459
- CH-A- 521 219
- DE-A1- 2 947 293
- DE-A1- 3 002 903
- DE-C1- 4 218 997
- DE-U1- 8 707 626
- GB-A- 2 067 312
- GB-A- 2 074 349

## Beschreibung

Die Erfindung betrifft ein Verfahren zur Regelung der Foliendicke von Schlauchfolien, die im Blasverfahren hergestellt, in einem reversierenden Wendeabzug flachgelegt, verlegt und anschließend in einer Reckanlage monoaxial in Maschinenrichtung verstreckt werden. Weiterhin betrifft die Erfindung eine Vorrichtung zur Durchführung des Verfahrens.

Für die Herstellung von reckfähigen Kunststofffolien ist das Folienblasverfahren geeignet. Diese Folien werden in Reckanlagen monoaxial in Maschinenrichtung verstreckt, wodurch sich Folien mit einer reduzierten Foliendicke ergeben. Durch das Recken werden z.B. folgende Folieneigenschaften verbessert: Zugfestigkeit, Steifigkeit, Transparenz, Barriereeigenschaften und/oder Maschinengängigkeit. Diese Folien finden z. B. Einsatz in flexiblen Verpackungen.

### Stand der Technik

Bei der Herstellung von Schlauchfolien kommen Foliendickenprofilregelsysteme mit segmentierten Regelzonen zum Einsatz. Durch diese Systeme lässt sich das Foliendickenprofil derart regeln, dass die Dickenabweichungen über den gesamten Schlauchumfang möglichst gering sind.

In der DE 100 47 836 A1 ist ein solches Verfahren zur Regelung des Foliendickenprofils in Folienblasanlagen speziell auf der Grundlage der Messung einer oder mehrerer einzelner Schichtdicken einer Mehrschichtfolie als Regelgröße beschrieben.

In der DE 29 47 293 A1 und der GB 2 074 349 A sind Verfahren zur Regelung der Foliendicke einer in einer Blasfolien- Extruderanlage hergestellte Folie offenbart, bei dem zunächst die Foliendicke um den Folienumfang gemessen wird und über ein einen Regelalgorithmus einen in mit Stellgliedern versehenen Korrektursektoren aufgeteilten Düsenring angesteuert wird um Folien mit definiertem Dickenprofil zu erhalten.

Systeme für die Foliendickenregelung in Längsreckanlagen für Cast-Folien oder kaschierte Folien sind ebenfalls bekannt. Die Regelung gestaltet sich wesentlich einfacher, da die Folie nicht reversiert wird und somit immer eine direkte Zuordnung der einzelnen Messpunkte im Dickenquerprofil der längsverstreckten Folie zu der Extrusionsdüse inkl. Stellgliedern bzw. den Regelzonen gegeben ist.

Aus der DE 39 41 185 A1 ist ein Verfahren zur Regelung der Foliendicke von Schlauchfolien aus Folienblasanlagen mit nachgeschalteter axialer bzw. biaxialer Verstreckung der aufgeblasenen Schlauchfolien in einem Ofen bekannt, so dass eine Endfolie entsteht die möglichst geringe Abweichungen in der Dicke aufweist.

Die WO 97/22459 A1 offenbart, ein Verfahren zur Herstellung von Produkten aus orientierten Polyhydroxyalkanoaten (PHA), die z.B. zunächst in einer Folienblasanlage hergestellt wird und in einem nach geschaltetem Verfahrensschritt im flachgelegten Zustand über Rollen in Maschinenrichtung gereckt werden.

Bei der Längsverstreckung in einer Reckanlage wird die Folie entsprechend des Reckgrades in Maschinenrichtung gedehnt und dadurch die Foliendicke reduziert. Gleichzeitig schnürt die Folie in Querrichtung ein, wodurch sich die Breite der Folie verringert. Diese Einschnürung hat zur Folge, dass die gereckte Folie von der Folienmitte in Richtung der Folienränder zunehmend geringfügig dicker wird, obwohl sie zuvor im Blasverfahren auf eine möglichst konstante Dicke geregelt wurde. Besonders ausgeprägt ist diese Dickenzunahme in den Folienrandbereichen. Dieses verursacht beim anschließenden Aufwickeln der Folie einen Kantenaufbau am Folienwickel. Die Folienbahn wird an den Rändern mit zunehmendem Wickeldurchmesser immer mehr gedehnt, was für die weitere Verarbeitung wie z.B. Drucken oder Laminieren stark nachteilig ist.

Durch Maßnahmen wie möglichst kleiner Reckspalt, geeignete Walzenbeschichtung, mechanisches oder elektrostatisches Festhalten der Folienränder, optimierte Temperaturführung oder geeignete Auswahl der Kunststoffmaterialien kann die Einschnürung und damit ein Kantenaufbau am Folienwickel reduziert werden. Dies ist für viele nachfolgende Verarbeitungsschritte aber nicht ausreichend. Nur durch Besäumen der Folienränder hat die verbleibende Folienbahn eine ausreichend geringe Abweichung des Dickenprofils, welche für das anschließende Aufwickeln der Folienbahn und Weiterverarbeiten erforderlich ist. Durch das Besäumen geht aber ein Großteil der Foliebreite verloren. Unabhängig von der Folienbreite fallen ca. 200 mm auf jeder Folienseite weg.

### Aufgabe

Der Erfindung liegt daher die Aufgabe zugrunde eine Lösung zu schaffen, die es ermöglicht, eine in einer Folienblasanlage hergestellte Folie nach der Flachlegung in einer Reckanlage monoaxial in Maschinenrichtung so zu verstreckten, dass die Endfolien ein Dickenprofil mit möglichst geringer Dickenzunahme von der Folienmitte zu den Folienrändern aufweist.

### Lösung

Bei einem Verfahren zur Regelung der Foliendicken der eingangs beschriebenen Art wird die Aufgabe erfindungsgemäß dadurch gelöst, dass das Foliendickenprofil der in der Folienblasanlage hergestellten Schlauchfolie so geregelt wird, dass durch das Recken eine Folie mit einem Dickenquerprofil mit möglichst geringen Abweichungen von der mittleren Foliendicke über die gesamte Folienbreite hergestellt wird.

### Beschreibung der Erfindung

Bei der Herstellung dieser Schlauchfolien werden üblicherweise Foliendickenprofilregelsysteme mit segmentierten Regelzonen verwendet. Dazu ist nach dem Folienblaskopf eine Messeinrichtung angeordnet, die das Dicken-Istprofil über den Umfang der Schlauchfolie erfasst. Es erfolgt nun ein Vergleich des Ist- mit dem Sollprofil und bei Abweichungen werden definierte Regeleingriffe in den Folienblasprozess vorgenommen. Die Beeinflussung des Dickenprofils erfolgt über die segmentierten Regelzonen z.B. durch Lufttemperieren oder Luftvolumenregelung.

Die Schlauchfolie wird nach dem Erkalten in einer Abzugseinrichtung flachgelegt und über einen Wendeabzug geführt. Der Wendeabzug hat die Aufgabe durch die Verlegung des zum Folienblaskopf ortsfesten Dickenprofils über die Breite der flachgelegten Folie, die Rollenqualität der aufgewickelten Folien zu verbessern. Durch die Verlegung der Dick- und Dünnstellen über die Rollenbreite entstehen Wickel ohne Fehlstellen, den so genannte Kolbenringen.

Der flachgelegte Schlauch wird nun der Reckanlage zugeführt und monoaxial in Maschinenrichtung verstreckt und anschließend zu einem Wickel aufgewickelt.

Die Messeinrichtung zur Erfassung des Dicken-Istprofils im Folienblasprozess kann wie bereits beschrieben zwischen Folienblaskopf und Abzug, oder auch zwischen Abzug und Reckanlage angeordnet sein.

Das Verfahren zur Regelung der Foliendicke kann auch eingesetzt werden, wenn die Schlauchfolien nicht im geblockten bzw. flachgelegten Zustand sondern als Flachfolien verstreckt werden. Hierzu werden sie entweder auf einer Seite oder mittig aufgeschnitten und aufgeklappt. Es ist auch möglich, die Schlauchfolien beidseitig aufzuschneiden, um zwei gleich breite Bahnen in jeweils einer Reckanlage zu verstrecken und anschließend aufzuwickeln.

Da die Folie beim Recken einschnürt und an den Folienrandbereichen Dickstellen auftreten, ist der vorgegebene Sollwert des Umfangsprofils im Folienblasprozess nicht konstant, sondern wird so eingestellt, dass nach der monoaxialen Verstreckung in Maschinenrichtung durch Dickenabweichungen während des Verstreckens eine Folie mit einem Dickenprofil mit möglichst geringen Abweichungen über die gesamte Folienbreite entsteht. Beispielsweise wird im Folienblasprozess eine Schlauchfolie hergestellt, die zwei gegenüberliegende Dünnstellen aufweist. Die Flachlegung der Schlauchfolie erfolgt nun so, dass die Dünnstellen die Folienrandbereiche bilden und die verstreckte Folie dann ein Dickenprofil mit möglichst geringen Abweichungen von der mittleren Foliendicke aufweist. Gleiches gilt für Schlauchfolien die beidseitig aufgeschnitten werden. Im Falle einer Schlauchfolie die einseitig aufgeschnitten wird, wird im Folienblasprozess eine Schlauchfolie mit nur einer Dünnstelle hergestellt. In der Mitte dieser Stelle wird die Schlauchfolie aufgeschnitten, um die Dünnstelle nach dem Aufschneiden auf die Folienrandbereiche links und rechts aufzuteilen, sodass nach dem Recken eine Folie mit einem Dickenprofil mit nur geringen Abweichungen entsteht.

Die Folie wird nach der Extrusions- und Kühleinheit in die reversierende Flachlegung geführt, wo sie über die Wendestangen und Umlenkrollen des Wendeabzuges so verlegt wird, dass sie immer auf die stationäre horizontale Umlenkwalze nach dem Abzug trifft, wo sie senkrecht nach unten zur Reckanlage umgelenkt wird. Durch diese Reversierbewegung wird das aktuelle Dickenprofil kontinuierlich verlagert, was bedeutet, dass die vorgegebenen Dünnstellen in der Folie, die im stationär stehenden Extrusionsbereich der Anlage hergestellt wird, der Reversierbewegung des Wendeabzuges folgen müssen, damit die Folie mit dem benötigten Soll-Dickenprofil, also mit den dünneren Folienrändern, der Reckanlage zugeführt wird. Dies erfolgt dadurch, dass den segmentierten Regelzonen der Folienprofilregelung ein Offset überlagert wird, der den Winkelversatz durch den rotierenden Abzug berücksichtigt und der Drehung der Wendestange nachfolgt.

Es erfolgt also eine Zuordnung eines oder mehrerer Umfangspunkte der im Abzug flachgelegten Schlauchfolie zu einer oder mehreren segmentierten Regelzonen. Der Regelalgorithmus sorgt dafür, dass nur die Dünnstellen im Sollprofil parallel zum Wendeabzug reversieren.

Für das erfindungsgemäße Regelsystem ist hinter der Reckanlage eine Messeinrichtung zur Messung des Dicken-Istprofils über die Breite der flachen, verstreckten Folie angeordnet.

Das vorgegebene Dicken-Sollprofil für den Folienblasprozess wird aus dem nach der Reckanlage gemessenen Dickenquerprofil über einen Algorithmus errechnet und kontinuierlich korrigiert, wodurch auch die durch den Reckprozess entstehenden Abweichungen im Dickenprofil der fertigen Folie ausgeregelt werden und eine Steigerung der Rollenqualität erreicht wird, da Folienwickel mit gleichmäßigen Wickeldurchmessern hergestellt werden sollen.

Gleichzeitig wird dadurch erreicht, dass die Breite der Folienstreifen, welche beim Besäumen der Folie beidseitig weg geschnitten werden, deutlich reduziert wird.

Zusätzlich kann in der Messeinrichtung die Foliendicke über die Wickelbreite summatorisch erfasst werden - das so genannte Rollenprofil - wodurch sich die Möglichkeit ergibt, das Dicken-Sollprofil mit Werten des Rollen-Istprofils zu überlagern, um selbst kleinste Dickenabweichungen, die immer im gleichen Bereich der fertigen Folie auftreten, zu eliminieren, da sie erst nach einem längeren Zeitraum festzustellen sind, wenn sie sich in Summe durch Veränderungen des Rollendurchmessers zeigen.

Die Regelung zur Ansteuerung der einzelnen Regelzonen kann aus einer Überlagerung der nachfolgend genannten Dickenprofile über einen Algorithmus berechnet werden. Diese segmentierten Regelzonen können im Blaskopf, in einem feststehenden oder rotierenden Kühlring oder in einer nachfolgend angeordneten Dickenregeleinheit, die sich synchron zum Wendeabzug bewegt, integriert sein.

Die Dickenprofile sind:
- das Grundprofil, welches zwischen Blaskopf und Reckanlage das Dicken-Istprofil am Umfang der Schlauchfolie erfasst
- das Reckprofil, welches nach der Reckanlage die gesamte Folienbreite erfasst, es berücksichtigt den Winkelversatz durch den reversierenden Wendeabzug und den Ausgleich der Dicke des Folienrandbereichs während des Reckens
- das Rollenprofil, welches eine Summe der gemessenen Reckprofile mit einer entsprechenden Bewertung darstellt (Dickensummenprofil, welches die Rollenqualität berücksichtigt).

Dies stellt eine kaskadierte Regelung dar, da folgende Regelkreise überlagert sind:
- Regelung der Foliendicke über den Schlauchfolienumfang während des Folienblasprozesses
- Regelung der Foliendicke über die Folienbreite der verstreckten Folie
- Regelung der Wickeldurchmesser über die Wickelbreite.

Das Dicken-Sollprofil kann auch manuell in das Regelsystem eingegeben werden, wobei es dann aber kontinuierlich der Drehung der Wendestangen nachgeführt werden muss.

Das Verfahren zur Regelung der Foliendicke kann auch in Anlagen eingesetzt werden, bei denen kein Wendeabzug installiert ist.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielsweise- ein bevorzugtes Ausführungsbeispiel der Erfindung dargestellt ist.

In den Zeichnungen zeigt:
Fig. 1: Folienblasanlage mit nachgeschalteter Reckanlage in der das erfindungsgemäße Verfahren zur Regelung der Foliendicke Anwendung findet.
Fig. 2: Draufsicht auf die Folienblasanlage mit Reckanlage
Fig. 3: Dicken-Istprofil eines Folienschlauches mit zwei Dünnstellen
Fig. 4: Dicken-Istprofil eines Folienschlauches mit einer Dünnstelle

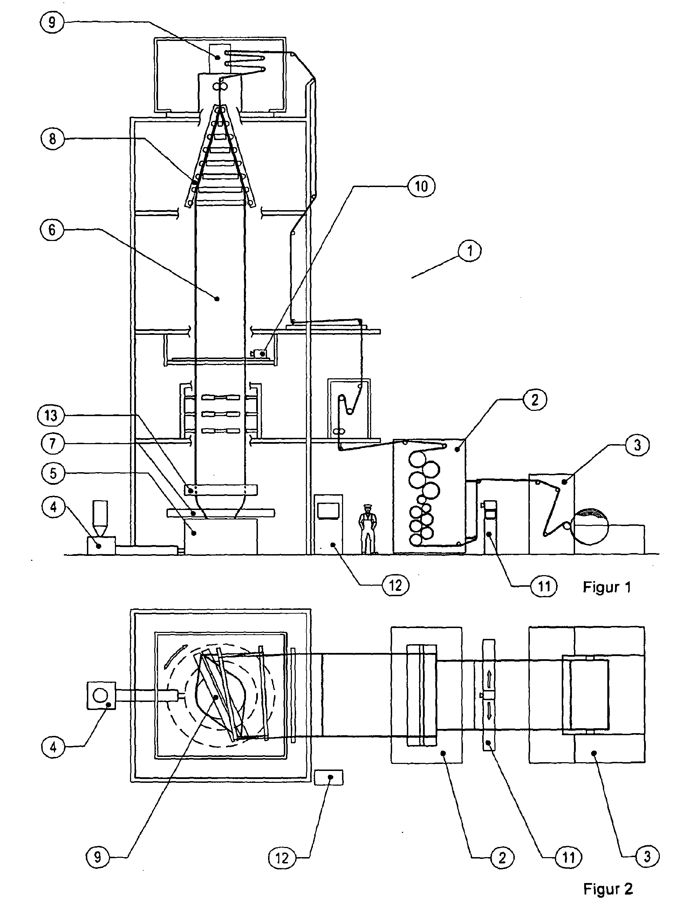

Die Figur 1 zeigt eine Folienblasanlage (1) mit nachgeschalteter Reckanlage (2) und Wickler (3). Über eine Dosiervorrichtung wird das zu verarbeitende Kunststoffgranulat einem Extruder (4) zugeführt, in diesem aufgeschmolzen, homogenisiert und dem Folienblaskopf (5) zugeführt. Bei der Herstellung von Mehrschichtfolien kommen entsprechend der Schichtzahl mehrere Extruder zum Einsatz. Der Folienblaskopf (5) weist eine Ringdüse auf, aus der die extrudierte Kunststoffmasse austritt. Durch den Folienblaskopf (5) erfolgt die Zuleitung von Kühlluft zum Aufblase der Schlauchfolie (6). Nach dem Erstarren des Kunststoffs wird die Schlauchfolie (6) in der Flachlegeeinheit (8) flachgelegt und mit dem Wendeabzug (9) kontinuierlich abgezogen und verlegt. Danach wird die geblockte Folie in der Reckanlage (2) monoaxial in Maschinenrichtung verstreckt. Die Folie wird dem Wickler (3) zugeführt und zu Folienwickeln aufgerollt.

Zur Regelung des Foliendickenprofils ist die Erfassung des Folien-Istprofils, vorzugsweise an zwei Stellen, erforderlich. Das Dicken-Istprofil am Umfang der Schlauchfolien (6) wird zwischen segmentierter Regeleinheit (7) und Wendeabzug (9) an der Messeinrichtung (10) erfasst und das Dicken-Istprofil der verstreckten Folie über deren Breite wird zwischen der Reckanlage (2) und dem Wickler (3) an der Messeinrichtung (11) erfasst. Die Messeinrichtung (10) zur Messung des Dicken-Istprofils der Schlauchfolie (6) ist bevorzugt in konstanter Höhe über dem Blaskopf (5) rotierend um die Schlauchfolie angeordnet.

Über die Anlagensteuerung (12) wird der gesamte Folienblasvorgang geregelt, insbesondere die Antriebe, Kühlluft, die segmentierte Regelzone (7), die sich im Kühlring, im Folienblaskopf (5) oder nachfolgend befindet sowie die Abzugsgeschwindigkeit der Schlauchfolie.

Die von den Messeinrichtungen (10) und (11) gemessenen Folienistprofile werden der Anlagensteuerung (12) zugeführt und durch ein Soll-/Ist-Vergleich Signale an die segmentierte Regelzone (7) weitergegeben.

In Figur 2 ist die Anlage in der Draufsicht dargestellt. Es wird verdeutlicht, dass der Wendeabzug (9) eine reversierende Bewegung zwischen 0 und 180° in jede Richtung (siehe Doppelpfeil) durchführt und dadurch die Schlauchfolie (6) nicht immer an denselben Kanten zusammengelegt wird. Würde dieser Versatz in der Regelung nicht berücksichtigt, würden die Dünnstellen die dem Dickenprofil der Schlauchfolie (6) im Blasprozess aufgeprägt wurden, über einen Bereich der Breite der flachgelegten Folie vor und zurücklaufen und nicht die Folienränder darstellen.

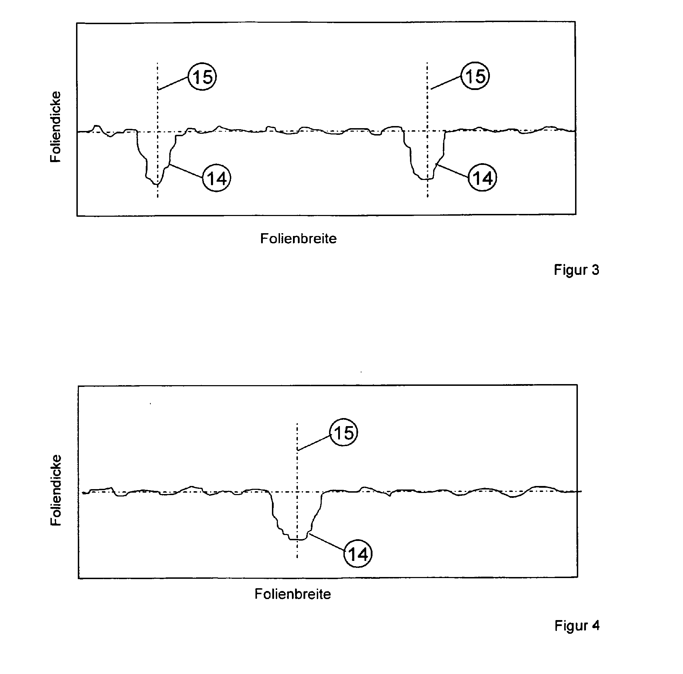

Figur 3 zeigt das Dicken-Istprofil eines Folienschlauches mit zwei Dünnstellen (14). Ein derartiges Dickenprofil wird z.B. von der Foliendickenmesseinrichtung (10) zwischen der segmentierten Regelzone (7) und Flachlegeeinrichtung (8) im ausgeregelten Zustand erfasst. Die beiden gestrichelten Linien (15) deuten die Falzkanten an, welche die beiden Seitenkanten der flachgelegten Folie bilden. Die beiden Dünnstellen (14) bilden die beiden Randbereiche, wenn die Folie der Reckanlage (2) als geblockter Schlauch zugeführt wird.

In einem weiteren, zuvor beschriebenen Ausführungsfall dieser Erfindung wird der geblasene und flachgelegte Folienschlauch an diesen beiden Positionen (15) aufgeschnitten und dann die beiden flachen Folienbahnen jeweils einer separaten Reckanlage (2) zugeführt. Auch hier bilden die beiden dünneren Bereiche, also jeweils eine Hälfte der in Figur 3 dargestellten Dünnstellen (14) die Randbereiche der der Reckanlage (2) zugeführten Folie.

Figur 4 zeigt das Dicken-Istprofil eines Folienschlauches mit nur einer Dünnstelle (14), wie es in einer dritten Ausführung der Erfindung Verwendung findet. Der Folienschlauch wird an nur einer Stelle (15) im Bereich der Dünnstelle (14) aufgeschnitten. Der aufgeschnittene Schlauch wird dann als flache Bahn aufgeklappt und der Reckanlage (2) zugeführt. Auch hier findet sich jeweils die Hälfte der Dünnstelle (14) als Randbereich der der Reckanlage zugeführten Folie wieder.

### Bezugszeichenliste

- 1: Folienblasanlage
- 2: Reckanlage
- 3: Wickler
- 4: Extruder
- 5: Folienblaskopf
- 6: Schlauchfolie
- 7: segmentierte Regelzone (optional)
- 8: Flachlegeeinheit
- 9: Wendeabzug
- 10: Dickenmesseinrichtung
- 11: Dickenmesseinrichtung
- 12: Anlagensteuerung
- 13: Zusatzregeleinheit (optional)
- 14: Dünnstelle im Foliendickenprofil
- 15: Schnitt-Stelle

## Patentansprüche

1. Verfahren zur Regelung der Foliendicke von verstreckten Schlauchfolien (6), die im Blasverfahren hergestellt, in einem reversierenden Wendeabzug (9) flachgelegt, verlegt und anschließend in einer Reckanlage (2) monoaxial in Maschinenrichtung verstreckt werden **dadurch gekennzeichnet, dass** das Foliendickenprofil der in der Folienblasanlage (1) hergestellten Schlauchfolie (6) so geregelt wird, dass das vorgegebene Dicken-Sollprofil Abweichungen von einer einheitlichen Foliendicke aufweist, welche der Kompensation der Foliendickenänderung über die Folienbreite die bei der anschließenden monoaxialen Versteckung in Maschinenrichtung entstehen, dienen so dass durch das Recken eine Folie mit einem Dickenquerprofil mit möglichst geringen Abweichungen von der mittleren Foliendicke über die gesamte Folienbreite hergestellt wird.

2. Verfahren zur Regelung der Foliendicke nach Anspruch 1 **dadurch gekennzeichnet, dass** die extrudierte Schlauchfolie (6) über den Umfang auf ein vorgegebenes Dicken-Sollprofil mittels eines Foliendickenprofilregelsystems geregelt wird.

3. Verfahren zur Regelung der Foliendicke nach Anspruch 1 und/oder Anspruch 2 **dadurch gekennzeichnet, dass** die durch den Wendeabzug (9) entstehende Sollprofilverlegung über die Folienbreite kompensiert und kontinuierlich nachgeregelt wird, wobei eine Zuordnung eines oder mehrerer Umfangspunkte der flachgelegten Schlauchfolie (6) zu einer oder mehreren Regelzonen im Regelalgorithmus zur Steuerung der segmentierten Regelzone (7) berücksichtigt wird.

4. Verfahren zur Regelung der Foliendicke nach einem oder mehreren der vorangegangenen Ansprüche **dadurch gekennzeichnet, dass** das vorgegebene Dicken-Sollprofil über einen Algorithmus aus den Werten einer Messeinrichtung (11), welche die Foliendicke nach der monoaxialen Verstreckung in Maschinenrichtung über die gesamte Folienbreite misst, geregelt wird.

5. Verfahren zur Regelung der Foliendicke nach einem oder mehreren der vorangegangenen Ansprüche **dadurch gekennzeichnet, dass** der Regelalgorithmus zur Ansteuerung der einzelnen segmentierten Regelzonen aus einer Überlagerung des
- des Grundprofils aus der Foliendickenprofilregelung der Folienblasanlage (1)
- des Reckprofils aus der Verlegung der Schlauchfolie (6) durch den Wendeabzug (9) und Einflüssen durch den Reckprozess
- und wahlweise des Rollenprofils aus der Bewertung des Folienwickels besteht.

6. Verfahren zur Regelung der Foliendicke nach einem oder mehreren der vorangegangenen Ansprüche **dadurch gekennzeichnet, dass** das Dicken-Sollprofil manuell in dem Regelsystem eingestellt wird.

7. Verfahren zur Regelung der Foliendicke nach einem oder mehreren der vorangegangenen Ansprüche **dadurch gekennzeichnet, dass** die Folie geblockt der Reckanlage (2) zugeführt wird.

8. Verfahren zur Regelung der Foliendicke nach einem oder mehreren der vorangegangenen Ansprüche **dadurch gekennzeichnet, dass** die Schlauchfolie (6) ein- oder beidseitig aufgeschnitten und aufgefaltet wird und der Reckanlage zugeführt wird.

9. Vorrichtung zur Durchführung des Verfahrens nach den vorangegangenen Ansprüchen **dadurch gekennzeichnet, dass** die Vorrichtung aus einer Folienblasanlage (1) mit Wendeabzug (9) und mindestens einer anschließenden Reckanlage (2) sowie mindestens einem Wickler (3) besteht.

10. Vorrichtung zur Durchführung des Verfahrens nach den vorangegangenen Ansprüchen **dadurch gekennzeichnet, dass** das Regelsystem aus segmentierten Regelzonen (7), mindestens zwei Messeinrichtungen (10, 11) für die Foliendicke, eine zur Messung des Dicken-Istprofils der Schlauchfolie (6) nach dem Folienblaskopf (5) und vor der Reckanlage (2), eine zur Messung des Dicken-Istprofils der verstreckten Folien nach der Reckanlage (2), sowie einer Regelungs- und Auswerteeinheit (12) besteht.

11. Vorrichtung zur Durchführung des Verfahrens nach den vorangegangenen Ansprüchen **dadurch gekennzeichnet, dass** die segmentierten Regelzonen im Blaskopf, in einem feststehenden oder rotierenden Kühlring oder in einer nachfolgend angeordneten Dickenregeleinheit, die sich synchron zum Wendeabzug bewegt, integriert sind.

## Claims

1. Process to regulate the thickness of oriented tubular film (6) that is manufactured in a film blowing process, laid flat and repositioned using an oscillating take-off unit (9) and subsequently oriented monoaxially in machine direction using an orientation unit (2), **characterised in that** the film thickness profile of the tubular film (6) manufactured in the film blowing line (1) is regulated such that the specified setpoint thickness profile displays deviations from a uniform film thickness which serve to compensate for the film thickness variations that develop across the film width during the subsequent monoaxial orientation in machine direction, so that as a result of the orientation, a film exhibiting a transverse thickness profile with as few deviations as possible from the average film thickness across the entire film width is manufactured.

2. Process to regulate the film thickness in accordance with Claim 1, **characterised in that** the extruded tubular film (6) is regulated using a film thickness profile control system to a specified setpoint thickness profile around the circumference.

3. Process to regulate the film thickness in accordance with Claim 1 and/or Claim 2, **characterised in that** the setpoint profile distribution brought about by the oscillating take-off unit (9) is compensated and continuously regulated as a function of the film width, whereby allowance is made for assignment of one or more circumferential points of the laid-flat tubular film (6) to one or more control zones in the control algorithm intended to control the segmented control zones (7).

4. Process to regulate the film thickness in accordance with one or more of the preceding claims, **characterised in that** the specified setpoint thickness profile is controlled by means of an algorithm calculated from the values of a measuring device (11) which measures the film thickness downstream of the monoaxial orientation in machine direction across the entire film width.

5. Process to regulate the film thickness in accordance with one or more of the preceding claims, **characterised in that** the control algorithm used to address the individual segmented control zones comprises a superimposition of
- the basic profile calculated by the film thickness profile control system of the film blowing system (1),
- the orientation profile that results from repositioning the film tube (6) downstream of the oscillating take-off unit (9) as well as effects from the orientation process,
- and optionally, the reel profile from evaluation of the film reel.

6. Process to regulate the film thickness in accordance with one or more of the preceding claims, **characterised in that** the setpoint thickness profile can be adjusted manually in the control system.

7. Process to regulate the film thickness in accordance with one or more of the preceding claims, **characterised in that** the film is fed to the orientation unit (2) in blocked condition.

8. Process to regulate the film thickness in accordance with one or more of the preceding claims, **characterised in that** the film tube (6) is cut open on either one or both sides and is then folded open before being fed to the orientation unit.

9. Equipment to implement the invention-design process in accordance with the preceding claims, **characterised in that** the equipment comprises a film blowing system (1) with oscillating take-off unit (9) and at least one downstream orientation unit (2) as well as at least one winder (3).

10. Equipment to implement the invention-design process in accordance with the preceding claims, **characterised in that** the control system consists of segmented control zones (7), at least two measuring devices (10, 11) to measure the film thickness - one to measure the actual thickness profile of the film tube (6) downstream of the die head (5) and upstream of the orientation unit (2), and one to measure the actual thickness profile of the oriented film downstream of the orientation unit (2) - as well as a master control system and evaluation unit (12).

11. Equipment to implement the invention-design process in accordance with the preceding claims, **characterised in that** the segmented control zones are integrated into the die head, into a stationary or rotating cooling ring or into a downstream thickness control unit whose movements are synchronous with those of the oscillating take-off unit.

## Revendications

1. Procédé pour le réglage de l'épaisseur de films tubulaires étirés (6), produits par soufflage, mis à plat et repositionnésdans un tireur réversible (9) et ensuite soumis à l'étiragemonoaxial dans une installation d'étirage de film en ligne (2) dans le sens de la machine, caractérisé en ce quele profil d'épaisseur du film tubulaire (6) produit dans l'installation de soufflage de film (1) est réglé de manière à ce que le profil nominal d'épaisseur déterminé montre des écarts d'une épaisseur de film uniforme, qui servent à la compensation de la modification de l'épaisseur du film par la largeur du film, quise produisent lors de l'étirage monoaxial dans le sens de la machine pour qu'on obtienne grâce à l'étirage un film dont le profil d'épaisseur montre si peu d'écarts que possible par rapport à l'épaisseur moyenne du film sur toute la largeur du film.

2. Procédé pour le réglage de l'épaisseur de filmconforme à la revendication 1, caractérisé en ce quele film tubulaire extrudé (6) est réglé par l'intermédiaire du pourtour à un profil nominal d'épaisseur déterminé moyennant un système de réglage du profil d'épaisseur de film.

3. Procédé pour le réglage de l'épaisseur de filmconforme à la revendication 1 et/ou la revendication 2 caractérisé en ce quel'écart du profil nominal produit par le tireur réversible (9) est compensé par la largeur du film et réajusté continuellement tout en respectant l'attribution d'un ou de plusieurs points du pourtour du film tubulaire (6) mis à platà une ou plusieurs zones de réglage de l'algorithme de réglage pour la commande des zones de réglage segmentées (7).

4. Procédé pour le réglage de l'épaisseur de film conforme à une ou plusieurs des revendications précédentes, **caractérisé en ce que** le profil nominal d'épaisseur déterminé est réglé par un algorithme basé sur les valeurs d'un dispositif de mesure (11) qui mesure l'épaisseur du film après l'étirage monoaxial dans le sens de la machine surtoute la largeur du film.

5. Procédé pour le réglage de l'épaisseur de film conforme à une ou plusieurs des revendications précédentes, **caractérisé en ce que** l'algorithme de réglage pour la commande des différentes zones de réglage segmentées se compose d'une superposition
- du profil initial résultant du réglage du profil d'épaisseur de film de l'installation de soufflage de film (1)
- du profil d'étirage résultant du repositionnement du film tubulaire (6) par le tireur réversible (9) et des influences du procédé d'étirage
- et au choix du profil de bobinage résultant de l'évaluation de la bobine de film.

6. Procédé pour le réglage de l'épaisseur de filmconforme à une ou plusieurs des revendications précédentes, caractérisé en ce quele profil nominal d'épaisseur est réglé manuellement au système de réglage.

7. Procédé pour le réglage de l'épaisseur de filmconforme à une ou plusieurs des revendications précédentes, caractérisé en ce quele film est amené à l'installation d'étirage en ligne sous forme de bloc, constitué des deux couches jointes.

8. Procédé pour le réglage de l'épaisseur de filmconforme à une ou plusieurs des revendications précédentes, caractérisé en ce quele film tubulaire (6) est coupé sur un ou deux côtés puis déplié et ensuite amené à l'installation d'étirage en ligne.

9. Dispositif pour la réalisation du procédé conforme à une ou plusieurs des revendications précédentes, caractérisé en ce queledispositif comprend une installation de soufflage de film (1) avec tireur réversible et au moins une installation d'étirage en ligne (2) montée en aval et au moins un enrouleur (3).

10. Dispositif pour la réalisation du procédé conforme à une ou plusieurs des revendications précédentes, caractérisé en ce quele système de réglage comprend des zones de réglage segmentées (7), au moins deux dispositifs de mesure (10, 11) pour l'épaisseur du film dont l'un est destiné à la mesure du profil réel d'épaisseur du film tubulaire (6) derrière la tête de soufflage (5) et devant l'installation d'étirage en ligne (2) ; et l'autre est destiné à la mesure du profil réel d'épaisseur du film après l'installation d'étirage en ligne (2) ainsi qu'une unité de régulation et d'évaluation (12).

11. Dispositif pour la réalisation du procédé conforme à une ou plusieurs des revendications précédentes, caractérisé en ce queles zones de réglage segmentées sont intégrées dans la tête de soufflage, dans un anneau de refroidissement fixe ou rotatif ou dans une unité de réglage d'épaisseur, disposée en aval et au mouvement synchronisé avec le tireur réversible.
